Europäisches Patentamt

European Patent Office

Office européen des brevets

(11) Veröffentlichungsnummer: **0 045 294**
**B1**

# (12) EUROPÄISCHE PATENTSCHRIFT

(45) Veröffentlichungstag der Patentschrift:
04.05.83

(21) Anmeldenummer: 81890102.7

(22) Anmeldetag: 23.06.81

(51) Int. Cl.³: **F 16 H 37/02**, F 16 H 7/22,
F 16 H 13/10

(54) Riemen-Reibradgetriebe.

(30) Priorität: 25.07.80 AT 3856/80

(43) Veröffentlichungstag der Anmeldung:
03.02.82 Patentblatt 82/5

(45) Bekanntmachung des Hinweises auf die Patenterteilung:
04.05.83 Patentblatt 83/18

(84) Benannte Vertragsstaaten:
DE FR IT NL

(56) Entgegenhaltungen:
AT-B-344 513
DE-A-2 245 615
DE-A-2 528 828
FR-A-2 083 958

(73) Patentinhaber: Steyr-Daimler-Puch Aktiengesellschaft,
Kärntnerring 7, A-1010 Wien (AT)

(72) Erfinder: Weigl, Franz, Beethovenstrasse 9, A-4300 St.
Valentin (AT)
Erfinder: Kitzinger, Heinz, Rohrbachbergstrasse 10,
A-4300 St. Valentin (AT)
Erfinder: Christian, Horst, Dipl.-Ing., Schillerstrasse 15,
A-4400 Steyr (AT)

(74) Vertreter: Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz (AT)

### Riemen-Reibradgetriebe

Die Erfindung bezieht sich auf ein Riemen-Reibradgetriebe, bei dem das Antriebsrad ortsfest und das Abtriebsrad auf einer mittels eines Kolbentriebes verstellbaren Schwinge gelagert und jedem der beiden Räder ein Reibrad gleichachsig zugeordnet ist, wobei die Schwinge zum Spannen des Riemens bzw. Anstellen der Reibräder dient.

Ist die Schwinge mit dem Abtriebsrad vom Antriebsrad weggeschwenkt, so ergibt sich durch entsprechende Riemenspannung ein gleichsinniger Antrieb der beiden Räder. Wird dagegen die Schwinge bis zum Berühren der Reibräder dem Antriebsrad genähert, so erfolgt ein Reibradantrieb mit Umkehr in Drehrichtung. Bei einem bekannten Riemen-Reibradgetriebe dieser Art (DE-A-2 528 828) wird die Schwinge von einem entsprechend schwenkbar gelagerten Verteilergetriebe gebildet, wobei das Getriebegewicht zur Riemenspannung ausgenützt wird und das Anstellen der Reibräder gegen die Gewichtsbelastung mit Hilfe eines hydraulischen Kolbentriebes erfolgt. Nachteilig ist, daß das Anstellen der Reibräder ohne eindeutig definierte Leerlaufstellung vor sich geht, daß es also zu einer plötzlichen Drehrichtungsumkehr aller rotierenden Massen kommt, was zu Beschädigungen des Getriebes, insbesondere aber der Reibbeläge od. dgl., führt. Es ist auch schon bekannt, unmittelbar an der Schwinge einen Handhebel vorzusehen und mit diesem die Schwinge ohne Hilfskraft zu verstellen (AT-B-344 513). Für die Handhebelstellungen sind zwar Einstellschrauben vorgesehen, jedoch können die einzelnen Stellungen beliebig eingenommen bzw. verlassen werden, so daß auch hier ein Übergehen der Leerlaufstellung möglich ist. Dazu kommt noch, daß keine genügende Anpreßkraft der Reibrollen und Spannkraft des Riemens gewährleistet und auch keine Vorkehrungen getroffen sind, die unvermeidbare Riemendehnung und den Reibbelagverschleiß auszugleichen.

Demnach liegt der Erfindung die Aufgabe zugrunde, diese Nachteile zu beseitigen und ein Riemen-Reibradgetriebe der eingangs geschilderten Art zu schaffen, bei dem der unmittelbare Übergang von einer Drehrichtung zur anderen sicher vermieden und ein selbsttätiges Nachstellen bei Riemendehnung oder Reibbelagverschleiß gewährleistet ist.

Die Erfindung löst die gestellte Aufgabe dadurch, daß die Schwinge gegen die Druckbeaufschlagung des Kolbentriebes im Anstellsinn der Reibräder feder- oder gewichtsbelastet ist, der Kolbentrieb bei Druckentlastung eine Anschlagstellung erreicht und der vorzugsweise vom Kolbentrieb selbst gebildete Anschlag im Sinne einer Freigabe der Reibradanstellung verstellbar ist.

Im Gegensatz zur bekannten Ausbildung dient der Kolbentrieb nicht zum Anstellen der Reibräder, sondern zur entgegengerichteten Schwingenbewegung, also zum Spannen des Riemens, so daß Riemendehnungen immer selbständig ausgeglichen werden. Das Anstellen der Reibräder erfolgt durch Feder- oder Gewichtsbelastung, so daß auch ein stets ausreichender Anpreßdruck erreicht wird und Unrundheiten od. dgl. keine Rolle spielen. Wird aus der Spannstellung des Riemens der Kolbentrieb entlastet, so kommt es nicht sofort zum Anstellen der Reibräder aneinander, sondern der Kolbentrieb erreicht eine Anschlagstellung, in der ein Leerlauf gesichert ist. Erst wenn der Anschlag verstellt wird, kommen die Reibräder unter der Feder- oder Gewichtsbelastung zur Berührung miteinander, so daß eine plötzliche Drehrichtungsumkehr vermieden wird. Das Anstellen der Reibräder aus der genau definierten Leerlaufstellung hat eine entsprechende Schonung der Reibbeläge od. dgl. zur Folge. Selbstverständlich kann aus der Anschlagstellung und damit aus der Leerlaufstellung auch wieder in die Riemenspannstellung übergegangen werden. Als Anschlag kann jedes geeignete konstruktive Mittel dienen, sofern es sich zur Freigabe der Reibradanstellung verstellen läßt und eine entsprechende Rückstellung gegen die Feder- bzw. Gewichtsbelastung möglich ist. Ein besonders einfacher Aufbau wird aber dadurch erzielt, daß der Kolbentrieb selbst den Anschlag bildet, d. h., daß der Kolben z. B. am Zylinderboden anschlägt und dann der ganze Kolbentrieb verstellt wird.

In weiterer Ausbildung der Erfindung greift der einerseits an der Schwinge angelenkte Kolbentrieb anderseits zur Anschlagverstellung an einem Handhebel an, der in zwei Schwenkstellungen verrastbar ist, wobei dann die eine Schwenkstellung der Riemenspannung und die andere Schwenkstellung der Reibradberührung zugeordnet sind. Wird in der dem Spannen des Riemens zugeordneten Stellung der Druckmittelabfluß aus dem Kolbentrieb freigegeben, so erreicht der Kolben, beispielsweise durch Anschlagen am Zylinderboden, die Anschlagstellung, und das Getriebe befindet sich in Leerlaufstellung. Sollen die Reibräder zur Wirkung kommen, muß dann der Handhebel in die andere Stellung verschwenkt werden.

Erfindungsgemäß führt die Druckmittelleitung zum Kolbentrieb über zwei in Reihe liegende Ventile, von denen das eine als von Hand betätigbares Ein- und Ausschaltventil dient und das andere als vom Handhebel gesteuertes Sicherheitsventil ausgebildet ist, das den Druckmittelabfluß vom Kolbentrieb freigibt, sobald der Handhebel die dem Spannen des Riemens zugeordnete Stellung verläßt. Wird das Ein- und Ausschaltventil betätigt, so wird entweder der Kolbentrieb mit Druckmittel beaufschlagt und die Schwinge aus der Leerlaufstellung in die Riemenspannstellung verschwenkt oder die

gegensinnige Bewegung herbeigeführt. Soll dagegen die Drehrichtungsumkehr erzielt, also das Reibradgetriebe eingeschaltet werden, so muß der Handhebel die dem Spannen des Riemens zugeordnete Stellung verlassen. Bei einer solchen Bewegung wird aber zwangsläufig das Sicherheitsventil, das bis dahin den Druckmittelzulauf zum Kolbentrieb ermöglicht hat, umgesteuert, so daß es nunmehr den Druckmittelabfluß vom Kolbentrieb freigibt, wodurch auf jeden Fall verhindert wird, daß beim Verschwenken des Handhebels aus der dem Spannen des Riemens zugeordneten Stellung und in seiner anderen Endstellung eine Druckbeaufschlagung des Kolbentriebes erfolgen kann. Dadurch läßt sich der Handhebel mühelos verschwenken, und es werden etwaige Fehlschaltungen vermieden.

Es wird häufig vorkommen, daß das erfindungsgemäße Getriebe einer Antriebsmaschine mit Leistungsregelung nachgeordnet ist. In diesem Fall kann es erwünscht oder auch notwendig sein, bei Benützung des Reibradgetriebes, also bei Drehrichtungsumkehr, die Leistung zu verringern. Um hier eine selbsttätige Regelung zu erreichen, ist der Handhebel, beispielsweise über einen Bowdenzug, mit einem verstellbaren Wegbegrenzer für das Regelglied der Antriebsmaschine verbunden.

In der Zeichnung ist der Erfindungsgegenstand in einem Ausführungsbeispiel dargestellt, und zwar zeigt

Fig. 1 die wesentlichen Teile eines Riemen-Reibradgetriebes, zum Teil schematisch in Ansicht, und

Fig. 2 in teilweise geschnittener Seitenansicht.

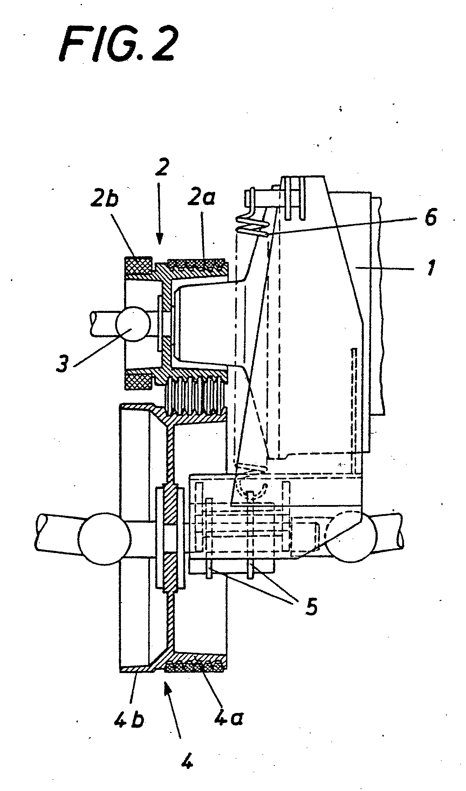

Auf der Welle eines Motors 1, vorzugsweise einer Einspritzbrennkraftmaschine, sitzt ein Antriebsrad 2, das einerseits als Keilriemenscheibe 2a, anderseits als Reibrad 2b ausgebildet ist, so daß die Keilriemenscheibe 2a und Reibrad 2b gleichachsig angeordnet sind. Von der Motorwelle kann über ein Kreuzgelenk 3 ein weiterer Antrieb abgenommen werden. Zum Riemen-Reibradgetriebe gehört das Abtriebsrad 4, das ebenfalls aus einer Riemenscheibe 4a und einem gleichachsig zu dieser angeordneten Reibrad 4b besteht. Das Abtriebsrad 4 ist auf einer Schwinge 5 gelagert, die unter der Zugbelastung durch eine Feder 6 steht und mittels eines Kolbentriebes 7 verstellt werden kann, wobei der Kolbentrieb 7 in Fig. 2 der besseren Übersichtlichkeit halber nicht dargestellt ist. Der einerseits an der Schwinge 5 angelenkte Kolbentrieb 7 greift anderseits an einem schwenkbaren Handhebel 8 an, dem ein feststehendes Rastsegment 9 zugeordnet ist. Ein unter Federspannung stehender Rastbolzen 10 greift in eine entsprechende Ausnehmung des Rastsegmentes 9 ein und hält den Handhebel 8 in der mit vollen Linien dargestellten Lage fest, wobei der Rastbolzen 10 einen am Rastsegment 9 befestigten elektrischen Schalter 11 betätigt, der einem als Sicherheitsventil dienenden Magnetschalter 12 zugeordnet ist. In der Druckmittelleitung 13 zum Kolbentrieb liegt in Serie zum Sicherheitsventil 12 ein von Hand betätigbares Ein- und Ausschaltventil 14. Der Kolbentrieb 7 ist nur einfach wirkend ausgebildet, er besitzt also einen Tauchkolben 7a. Am Handhebel 8 greift noch ein Bowdenzug 15 an, der zu einem gegen Federkraft schwenkbaren Hebel 16 führt, der mit einem Anschlag 17 den möglichen Weg des Stellhebels 18 der nicht dargestellten Einspritzpumpe des als Einspritzbrennkraftmaschine ausgebildeten Motors 1 begrenzt.

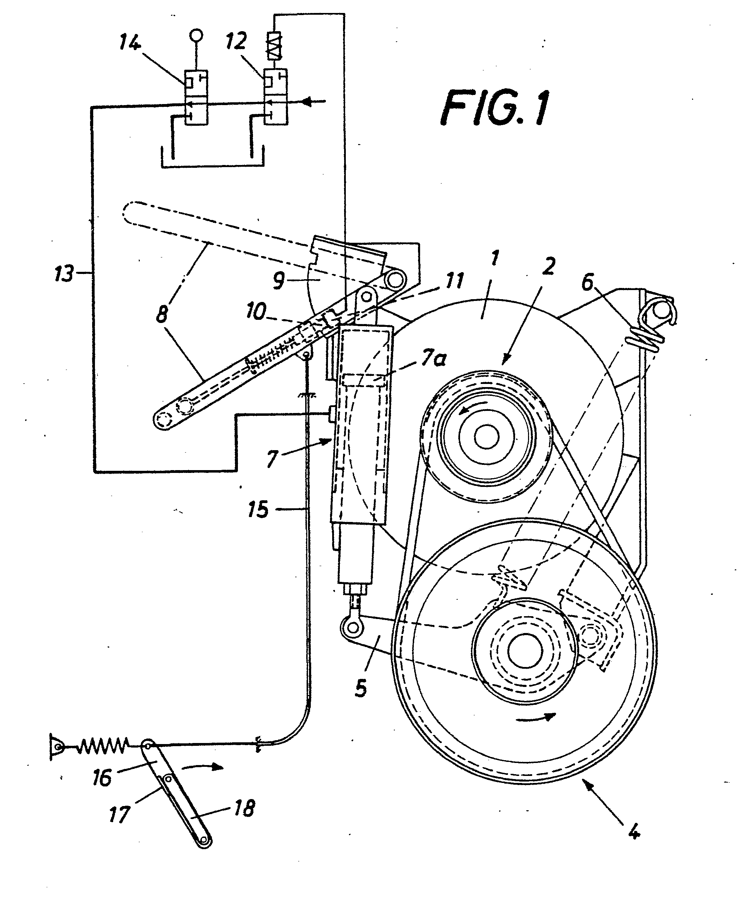

In den Fig. 1 und 2 ist jene Stellung des Getriebes dargestellt, in der es als reiner Riementrieb wirkt und demnach die Riemen entsprechend gespannt sind. Zum Spannen der Riemen ist der Kolben 7a des Kolbentriebes 7 dauernd mit Drucköl aus der Leitung 13 beaufschlagt und der als Wegbegrenzer dienende Hebel 16, 17 gibt dem Stellhebel 18 der Einspritzpumpe des Motors 1 den größten Schwenkbereich. Soll das Getriebe in Leerlaufstellung gebracht werden, so wird das Ein- und Ausschaltventil 14 betätigt, so daß es den Druckmittelzulauf unterbricht und den Druckmittelabfluß vom Kolbentrieb 7 freigibt. Unter der Wirkung der Feder 6 schwenkt die Schwinge 5 gemäß Fig. 1 im Uhrzeigersinn, bis der Kolben 7a am Zylinderboden anstößt und dort seinen Anschlag findet, wobei noch keine Berührung der Reibräder 2b, 4b stattfindet und die Leerlaufstellung der Räder 2, 4 mit lockeren Riemen eindeutig definiert ist.

Soll nun unter Drehrichtungsumkehr auf Reibradtrieb übergegangen werden, so wird der Rastbolzen 10 des Handhebels 8 aus der Ausnehmung des Rastsegmentes 9 gezogen und der Handhebel 8 in die strichpunktiert dargestellte Stellung verschwenkt, wo eine neuerliche Einrastung stattfindet. Die Feder 6 zieht die beiden Reibräder 2b, 4b gegeneinander, wobei aber zwischen dem Kolben 7a und dem Zylinderboden des Kolbentriebes 7 ein entsprechendes Spiel vorhanden ist. Sobald der Rastbolzen 10 aus der unteren Ausnehmung des Rastsegmentes 9 ausgetreten ist, wird der Schalter 11 betätigt und damit das als Sicherheitsventil dienende Magnetventil 12 so verstellt, daß unabhängig von der Stellung des Ein- und Ausschaltventils 14 die Druckmittelzufuhr zum Kolbentrieb 7 unterbrochen und der Abfluß von dort freigegeben ist. Beim Verschwenken des Handhebels 8 wird über den Bowdenzug 15 auch der Hebel 16 gegen den Federzug verschwenkt und damit der mögliche Schwenkweg des Stellhebels 18 eingeengt, so daß bei Reibradantrieb nur mit verringerter Leistung des Motors 1 gefahren werden kann.

**Patentansprüche**

1. Riemen-Reibradgetriebe, bei dem das Antriebsrad (2) ortsfest und das Abtriebsrad (4) auf einer mittels eines Kolbentriebes (7) verstellbaren Schwinge (5) gelagert und jedem der beiden Räder (2, 4) ein Reibrad (2b, 4b) gleichachsig zugeordnet ist, wobei die Schwinge (5) zum Spannen des Riemens bzw. Anstellen der Reibräder dient, dadurch gekennzeichnet, daß die Schwinge (5) gegen die Druckbeaufschlagung des Kolbentriebes (7) im Anstellsinn der Reibräder (2b, 4b) feder- oder gewichtsbelastet ist, der Kolbentrieb (7) bei Druckentlastung eine Anschlagstellung erreicht und der vorzugsweise vom Kolbentrieb (7) selbst gebildete Anschlag im Sinne einer Freigabe der Reibradanstellung verstellbar ist.

2. Getriebe nach Anspruch 1, dadurch gekennzeichnet, daß der einerseits an der Schwinge (5) angelenkte Kolbentrieb (7) anderseits zur Anschlagverstellung an einem Handhebel (8) angreift, der in zwei Schwenkstellungen verrastbar ist.

3. Getriebe nach den Ansprüchen 1 und 2, dadurch gekennzeichnet, daß die Druckmittelleitung (13) zum Kolbentrieb (7) über zwei in Reihe liegende Ventile (12, 14) führt, von denen das eine als von Hand betätigbares Ein- und Ausschaltventil (14) dient und das andere als vom Handhebel (8) gesteuertes Sicherheitsventil (12) ausgebildet ist, das den Druckmittelabfluß vom Kolbentrieb (7) freigibt, sobald der Handhebel (8) die dem Spannen des Riemens zugeordnete Stellung verläßt.

4. Getriebe nach den Ansprüchen 1 bis 3, das einer Antriebsmaschine mit Leistungsregelung nachgeordnet ist, dadurch gekennzeichnet, daß der Handhebel (8), beispielsweise über einen Bowdenzug (15), mit einem verstellbaren Wegbegrenzer (16, 17) für das Regelglied (18) der Antriebsmaschine (1) verbunden ist.

## Claims

1. A belt and friction wheel transmission in which the input wheel (2) is stationary and the output wheel (4) is mounted on a rocker (5), which is adjustable by means of a piston-cylinder unit (7), each of said two wheels (2, 4) has a friction wheel (2b, 4b) coaxially associated with it, and the rocker (5) serves to tension the belt and to move the friction wheels into engagement, characterized in that the rocker (5) is spring-loaded or weight-loaded in a sense to move the friction wheels (2b, 4b) into engagement against the action of the pressure applied to the piston-cylinder unit (7), the piston-cylinder unit (7) is moved to a stop position in response to a pressure relief, and the stop is preferably formed by the piston-cylinder unit (7) and is adjustable in a sense to release the friction wheel for a movement to an engaging position.

2. A transmission according to claim 1, characterized in that the piston-cylinder unit (7) is pivoted at one end to the rocker (5) and at its other end engages a hand lever (8), which serves to adjust the stop and is adapted to be releasably locked in two angular positions.

3. A transmission according to claims 1 and 2, characterized in that the fluid conduit (13) connected to the piston-cylinder unit (7) includes two series-connected valves (12, 14), one of which serves as a manually operable ON-OFF valve (14) and the other of which consists of a safety valve (12), which is controlled by the hand lever (8) and permits a flow of fluid from the piston-cylinder unit (7) as soon as the hand lever (8) leaves the position which is associated with the tensioning of the belt.

4. A transmission according to claims 1 to 3, which succeeds a prime mover having power control means, characterized in that the hand lever (8) is connected, e. g., by a Bowden cable (15) to an adjustable member (16, 17) for limiting the displacement of the control member (18) of the prime mover (1).

## Revendications

1. Transmission par courroie et poulie de friction dans laquelle la poulie menante (2) est montée en position fixe et la poulie menée (4) sur un balancier (5) réglable au moyen d'un mécanisme à piston (7) et à chacune des deux poulies (2, 4) est adjointe coaxialement une poulie de friction (2b, 4b), le balancier (5) servant à tendre la courroie ou à approcher les poulies de friction, caractérisée par le fait que le balancier (5) est sollicité par ressort ou contrepoids dans le sens d'approche des poulies de friction (2b, 4b), à l'encontre de la pression exercée par le mécanisme à piston (7), que le mécanisme à piston (7) atteint, lorsqu'il est déchargé de pression, une position de butée et que la butée, de préférence formée par le mécanisme à piston (7) lui-même, est réglable dans le sens d'une libération de l'approche des poulies de friction.

2. Transmission selon la revendication 1, caractérisée par le fait que le mécanisme à piston (7), articulé d'une part au balancier (5), s'applique d'autre part, pour le réglage de la butée, à un levier à main (8) qui peut être arrêté dans deux positions de pivotement.

3. Transmission selon les revendications 1 et 2, caractérisée par le fait que le tuyau à agent de pression (13) menant au mécanisme à piston (7) passe par deux valves (12, 14) placées en série, dont l'une sert de valve de mise en action et hors d'action (14) pouvant être actionnée manuellement, et l'autre est conçue sous la forme d'une valve de sûreté (12), commandée par le levier à main (8), qui libère l'écoulement de l'agent de pression hors du mécanisme à piston (7) aussitôt que le levier à main (8) quitte la position affectée à la tension de la courroie.

4. Transmission selon les revendications 1 à 3, placée à la suite d'une machine d'entraînement avec réglage de puissance et caractérisée par le fait que le levier à main (8) est relié, par exemple par l'intermédiaire d'une gaine Bowden (15), à un limiteur de course réglable (16, 17) de l'organe de réglage (18) de la machine d'entraînement.

FIG.1

# FIG.2